# FASCICULE DE BREVET EUROPEEN

(11) **EP 0 546 616 B1**
(45) Date de publication et mention de la délivrance du brevet: **02.10.1996**
(21) Numéro de dépôt: 92203733.8
(22) Date de dépôt: 03.12.1992
(51) Int. Cl.: C01B 15/023, B01J 37/22

(54) **Procédé pour la fabrication de peroxyde d'hydrogène**
Verfahren zur Herstellung von Wasserstoffperoxid
Process for the production of hydrogen peroxide

(30) Priorité: 12.12.1991 BE 9101132
(43) Date de publication de la demande: 16.06.1993
(73) Titulaire: SOLVAY INTEROX (Société Anonyme), B-1050 Bruxelles (BE)
(72) Inventeur: Deremince, Véronique, B-1300 Wavre (BE); Vogels, Claude, B-1380 Lasne (BE)
(74) Mandataire: Decamps, Alain René François

(56) Documents cités:
- EP-A- 0 321 306
- DE-A- 1 951 276
- US-A- 2 657 980
- US-A- 4 251 347

## Description

L'invention concerne un procédé pour la fabrication de peroxyde d'hydrogène selon la technique d'oxydation des alkylanthraquinones.

Selon cette technique, on fabrique du peroxyde d'hydrogène par un procédé cyclique comportant trois étapes principales consistant, dans une première étape, à hydrogéner une solution de travail organique d'au moins une alkylanthraquinone et/ou d'au moins une tétrahydroalkylanthraquinone pour produire une ou plusieurs anthrahydroquinones et/ou tétrahydroanthrahydroquinones alkylées. La solution de travail contenant les anthrahydroquinones alkylées et/ou les tétrahydroanthrahydroquinones alkylées est ensuite, dans une deuxième étape, soumise à oxydation au moyen d'oxygène, d'air ou d'air enrichi en oxygène pour fournir du peroxyde d'hydrogène et reformer les alkylanthraquinones et/ou tétrahydroalkylanthraquinones. Le peroxyde d'hydrogène formé est ensuite séparé de la solution organique de travail dans une troisième étape d'extraction par l'eau, le peroxyde d'hydrogène étant récupéré dans la phase aqueuse. La solution organique de travail contenant les alkylanthraquinones et/ou les tétrahydroalkylanthraquinones est ensuite recyclée à la première étape d'hydrogénation afin de recommencer le cycle de production de peroxyde d'hydrogène.

Il est connu depuis longtemps (brevet US-2657980 au nom de du Pont de Nemours) de réaliser la première étape de réduction de la solution organique d'alkylanthraquinones par hydrogénation catalytique en présence de palladium métallique. Ce palladium peut avantageusement être fixé sur un support solide tel que, par exemple, l'alumine.

Ce procédé connu présente toutefois l'inconvénient de donner lieu à la formation de composés hydrogénés indésirables tels que l'oxanthrone et l'anthrone qui s'accumulent dans la solution organique de travail et dont l'oxydation ultérieure ne permet plus la production de peroxyde d'hydrogène.

L'invention vise à remédier à cet inconvénient du procédé connu en fournissant un procédé qui permette de limiter la vitesse des réactions parasites d'hydrogénation des alkylanthraquinones et la formation de composés tels que l'oxanthrone, indésirables pour la production de peroxyde d'hydrogène.

A cet effet, l'invention concerne un procédé pour la fabrication de peroxyde d'hydrogène en trois étapes principales consistant, dans une première étape, à hydrogéner une solution organique d'alkylanthraquinones et/ou de tétrahydroalkylanthraquinones, à oxyder, dans une deuxième étape la solution organique provenant de la première étape au moyen d'air, d'oxygène ou d'air enrichi en oxygène et, dans une troisième étape, à extraire au moyen d'eau le peroxyde d'hydrogène formé à la deuxième étape selon lequel la première étape d'hydrogénation s'effectue en présence d'un catalyseur au palladium métallique supporté sur de l'alumine qui a subi un traitement d'halogénation préalable à la fixation du palladium.

Par alkylanthraquinones, on entend désigner les 9,10-anthraquinones substituées en position 1,2 ou 3 par au moins une chaîne latérale alkyle de type aliphatique linéaire ou ramifiée comprenant au moins un atome de carbone ainsi que leurs dérivés tétrahydrogénés en position 5,6,7 et 8. Habituellement, ces chaînes alkyles comportent moins de 9 atomes de carbone et, de préférence, moins de 6 atomes de carbone. Des exemples de telles alkylanthraquinones sont la 2-éthylanthraquinone, la 2-isopropylanthraquinone, les 2-sec- et 2-tert-butylanthraquinones, les 1,3-, 2,3-, 1,4- et 2,7-diméthylanthraquinones, les 2-iso- et 2-tert-amylanthraquinones et les mélanges de ces quinones. On utilise le plus souvent un mélange d'alkylanthraquinones et d'alkyl-,5,6,7,8-tétrahydroanthraquinones.

Selon le procédé conforme à l'invention, l'alumine du support du catalyseur peut être constituée d'alumine de variété alpha, bêta ou gamma ou d'un mélange d'une ou plusieurs de ces variétés. La surface spécifique de cette alumine doit être suffisante pour assurer une efficacité substantielle au catalyseur. En général, il convient que cette surface mesurée suivant la méthode BET soit supérieure à 30 m²/g et, de préférence, supérieure à 50 m²/g. Le plus souvent, cette surface sera inférieure à 300 m²/g et, de préférence, inférieure à 250 m²/g.

Par traitement d'halogénation, on entend désigner un traitement ayant pour but de fixer des atomes d'halogène sur la surface de l'alumine, sans toutefois en modifier sa porosité. Selon l'invention, le traitement d'halogénation de l'alumine s'effectue avant la fixation du palladium.

Le traitement d'halogénation conforme à l'invention consiste, de préférence, à faire subir à l'alumine au moins un traitement choisi parmi les traitements de chloration, de bromation et de fluoration. Le traitement de fluoration a donné les meilleurs résultats et est particulièrement préféré.

Le traitement d'halogénation se réalise généralement par mise en contact de l'alumine avec un halogénure d'ammonium que l'on fait suivre d'un traitement thermique à une température comprise entre 300 et 800°C. De préférence, on effectue le traitement thermique sous un balayage d'un gaz inerte tel que l'azote ou un gaz rare. L'azote a donné de bons résultats. La mise en contact de l'halogénure d'ammonium avec l'alumine peut se faire, de manière indifférente, par mélange à sec d'alumine et d'halogénure d'ammonium en poudre ou en milieu aqueux par mise en suspension d'une poudre d'alumine dans une solution aqueuse d'halogénure d'ammonium et imprégnation des particules d'alumine par évaporation à sec de la solution.

Dans le procédé selon l'invention, on met en oeuvre une quantité d'halogène supérieure à 0,2 % du poids de l'alumine du support. Il convient aussi que la quantité d'halogène mise en oeuvre selon le procédé conforme à l'invention ne dépasse pas 15 % du poids de l'alumine. De préférence, la quantité d'halogène mise en oeuvre dans le procédé selon l'invention sera supérieure à 0,5 % du poids d'alumine. De même, on préférera utiliser des supports de catalyseur dans lesquels on a mis en oeuvre l'halogène à raison de moins de 10 % en poids de l'alumine.

La quantité d'halogène réellement fixée sur le support d'alumine est habituellement sensiblement inférieure à la quantité mise en oeuvre. Elle est généralement fonction de l'état initial de l'alumine et des conditions du traitement thermique effectué.

Selon l'invention, le catalyseur utilisé dans la première étape d'hydrogénation comprend une quantité de palladium fixée sur le support d'alumine telle que cette quantité est supérieure à 0,1 % en poids par rapport à l'alumine. Il convient aussi que cette quantité de palladium soit inférieure à 5 % en poids par rapport à l'alumine. De préférence, la quantité de palladium sera supérieure à 1 % en poids par rapport à l'alumine. De même, il sera préférable de mettre en oeuvre moins de 3 % en poids de palladium par rapport à l'alumine.

Dans une variante au procédé selon l'invention, on peut utiliser une alumine qui a été dopée par au moins un métal alcalin, au moins un métal alcalino-terreux ou un mélange d'au moins un métal alcalin et d'au moins un métal alcalino-terreux. Par métal alcalin, on choisira de préférence du sodium, du potassium ou du lithium. Par métal alcalino-terreux, on préférera le calcium ou le magnésium. La quantité de métal alcalin et/ou de métal alcalino-terreux utilisé pour doper l'alumine ne dépasse généralement pas 5 % en poids de celle-ci et, de préférence, pas 1 %. Elle est habituellement plus grande que 0,001 % en poids et, de préférence, plus grande que 0,005 %.

Une autre variante au procédé selon l'invention consiste à utiliser, dans la première étape d'hydrogénation du procédé selon l'invention un catalyseur supporté sur une alumine imprégnée par au moins un autre oxyde métallique choisi parmi les oxydes de fer, de chrome et de molybdène. La quantité d'oxyde métallique imprégné sur l'alumine sera généralement inférieure à 5 % en poids de celle-ci et, de préférence, inférieure à 1 %. Habituellement, cette quantité sera plus grande que 0,01 % en poids et, de préférence, plus grande que 0,05 %. On peut aussi utiliser une alumine imprégnée par des oxydes métalliques et dopée par au moins un métal alcalin ou un métal alcalino-terreux.

L'invention concerne aussi un catalyseur d'hydrogénation d'une solution organique d'alkylanthraquinones utilisée pour la fabrication de peroxyde d'hydrogène. Selon l'invention, le catalyseur comprend du palladium métallique supporté sur un support d'alumine halogénée.

De préférence, le support du catalyseur d'hydrogénation selon l'invention est une alumine fluorée.

L'invention concerne enfin un procédé pour la fabrication du catalyseur conforme à l'invention selon lequel on mélange à sec une poudre d'alumine avec la quantité requise d'halogénure d'ammonium pour que la teneur en halogène du mélange soit comprise entre 0,2 et 15 % en poids par rapport à l'alumine, on calcine sous atmosphère inerte, on laisse ensuite refroidir l'alumine halogénée, on met en suspension l'alumine halogénée dans une solution aqueuse d'un sel soluble de palladium, on précipite du palladium métallique sur l'alumine halogénée en augmentant le pH de la suspension de manière progressive jusqu'à une valeur légèrement alcaline, on sépare le catalyseur obtenu et on le sèche.

La température de calcination de l'alumine mélangée à la poudre d'halogénure d'ammonium doit être supérieure à 300°C et, de préférence, supérieure à 350°C. De même, il convient que cette température de calcination soit inférieure à 800°C et, de préférence, inférieure à 700°C. La température de 400°C a donné de bons résultats.

La durée de l'opération de calcination de l'alumine dépend de la température et doit être suffisante pour chasser toute trace d'ammoniac. Généralement, cette durée est supérieure à 3 heures et, de préférence, supérieure à 4 heures. De même, cette durée de calcination ne sera habituellement pas supérieure à 24 heures et, de préférence, pas supérieure à 20 heures. Une durée de calcination de 16 heures convient bien. La calcination se fait de préférence sous balayage d'un gaz inerte. Le gaz inerte est avantageusement choisi parmi l'azote et les gaz rares. L'azote a donné de bons résultats.

La séparation du catalyseur de la solution aqueuse peut se faire par toute technique connue de séparation d'un solide d'avec un liquide. La séparation par filtration a donné de bons résultats. Elle permet en outre de procéder aisément à un lavage éventuel du catalyseur avec de l'eau avant de le soumettre au séchage. Celui-ci peut s'effectuer par chauffage à température modérée ne dépassant pas 200°C ou par exposition du catalyseur dans une atmosphère balayée par un courant gazeux chaud de température comprise entre la température ambiante et 150°C. Le gaz de balayage peut être choisi parmi l'air ou un gaz inerte tel que défini plus haut. L'air a donné de bons résultats.

Une variante au procédé de fabrication du catalyseur selon l'invention consiste à mettre l'alumine en suspension dans une solution d'halogénure d'ammonium et à évaporer à sec puis à calciner et à fixer le palladium comme décrit ci-dessus.

Selon cette variante, on règle le volume de la solution d'halogénure d'ammonium pour que la teneur en halogène du mélange soit comprise entre 0,2 et 15 % en poids par rapport à l'alumine.

Les exemples qui suivent sont donnés dans le but d'illustrer l'invention, sans pour autant en limiter sa portée.

### Exemple 1 : Préparation du catalyseur

### a. Traitement d'halogénation :

10 g d'alumine ont été broyés mécaniquement avec 2,95 g de NH₄F de façon à assurer un poids de F de 10 % par rapport à l'alumine. Le mélange obtenu a été ensuite calciné pendant 16 heures sous un balayage d'azote (débit 20 ml/min) à une température de 400°C que l'on atteint moyennant une allure de chauffe modérée de 1°C/min.

### b. Fixation du palladium :

10 g d'alumine fluorée ont été mis en suspension dans 100 ml d'eau. On a alors ajouté 26 ml d'une solution acide de PdCl₂ (1,2821 g de PdCl₂ dans 100 ml HCl N) de façon à obtenir une teneur en palladium de 2 % par rapport à l'alumine. On précipite ensuite le palladium sur l'alumine fluorée en augmentant progressivement le pH de la solution jusqu'à une valeur finale de 8 par addition de NaOH 10 N. Le catalyseur a ensuite été filtré, puis lavé par 300 ml d'eau et séché à 110°C à l'air pendant 16 heures.

### Exemple 2 : Préparation du catalyseur

### a. Traitement d'halogénation :

30 g d'alumine ont été mis en suspension dans 100 ml d'une solution de NH₄F (14,3 g de NH₄F dans 250 ml d'eau). L'alumine a ensuite été imprégnée par le fluorure en évaporant la solution à sec. Elle a enfin été calcinée à 600°C sous courant d'azote pendant 5 heures.

### b. Fixation du palladium :

On a procédé comme dans l'exemple 1.

### Exemple 3 : Essais d'hydrogénation

Deux catalyseurs préparés à partir de deux alumines commerciales selon le procédé de l'exemple 2 ont été utilisés pour hydrogéner une solution d'un mélange d'alkylanthraquinones dans un solvant organique constitué d'un mélange de 20 % en poids de diisobutylcarbinol et de 80 % en poids d'un solvant aromatique commercial de marque SOLVESSO 150. Le mélange d'alkylanthraquinones avait la composition pondérale suivante :
7 % de butylanthraquinone
40 % de tert-amylanthraquinone
52 % de sec-amylanthraquinone
0,7 % de tert-amyltétrahydroanthraquinone
0,7 % de sec-amyltétrahydroanthraquinone.

La réaction d'hydrogénation a été effectuée en réacteur agité à 75°C et sous une pression d'hydrogène de 2 bar pendant une durée d'environ 1 heure.

Après hydrogénation, la solution a été analysée pour déterminer sa teneur en oxanthrone.

Les mêmes essais ont également été effectués avec des catalyseurs obtenus à partir des mêmes alumines commerciales sur lesquelles on a fixé le palladium sans leur faire subir de traitement de fluoration préalable.

Les résultats obtenus ont été les suivants :

| Type d'alumine | Traitement de fluoration | Rapport molaire oxanthrones/anthraquinones |
|---|---|---|
| alumine A1 | non | 0,320 |
| alumine A1 | oui | 0,050 |
| alumine A2 | non | 0,340 |
| alumine A2 | oui | 0,085 |

L'alumine A2 était une alumine commercialisée par la firme RHONE-POULENC sous le type 501 et l'alumine A1 était une alumine préparée en laboratoire pour les besoins de l'essai.

On voit que dans les deux cas, le traitement de fluoration a permis de diminuer fortement la formation d'oxanthrone.

## Revendications

1. Procédé pour la fabrication de peroxyde d'hydrogène en trois étapes principales consistant, dans une première étape, à hydrogéner une solution organique d'alkylanthraquinones et/ou de tétrahydroalkylanthraquinones, à oxyder, dans une deuxième étape la solution organique provenant de la première étape au moyen d'air, d'oxygène ou d'air enrichi en oxygène et, dans une troisième étape, à extraire au moyen d'eau le peroxyde d'hydrogène formé à la deuxième étape selon lequel la première étape d'hydrogénation s'effectue en présence d'un catalyseur au palladium métallique supporté sur de l'alumine, caractérisé en ce que l'alumine du support du catalyseur d'hydrogénation a subi un traitement d'halogénation préalable à la fixation du palladium.

2. Procédé selon la revendication 1, caractérisé en ce que le traitement d'halogénation est sélectionné parmi au moins un des traitements de chloration, de bromation ou de fluoration.

3. Procédé selon la revendication 1 ou 2, caractérisé en ce que le traitement d'halogénation est un traitement de fluoration.

4. Procédé selon l'une quelconque des revendications 1 à 3, caractérisé en ce que l'alumine du support de catalyseur a en outre été dopée à raison de moins de 5 % de son poids par au moins un métal alcalin ou un métal alcalino-terreux.

5. Procédé selon l'une quelconque des revendications 1 à 3 ou selon la revendication 4, caractérisé en ce que l'alumine du support du catalyseur est en outre imprégnée à raison de moins de 5 % de son poids par des oxydes de métaux choisis parmi le fer, le chrome et le molybdène.

6. Procédé selon l'une quelconque des revendications 1 à 5, caractérisé en ce que l'alumine du support de catalyseur a été traitée par une quantité d'halogène comprise entre 0,2 et 15 % du poids de l'alumine.

7. Procédé selon l'une quelconque des revendications 1 à 6, caractérisé en ce que la teneur en palladium métallique du catalyseur est comprise entre 0,1 et 5 % en poids.

8. Utilisation de palladium métallique supporté sur de l'alumine halogénée comme catalyseur pour hydrogéner au moyen d'hydrogène gazeux une solution organique d'alkylanthraquinones en quinones hydrogénées.

9. Utilisation de palladium métallique supporté sur de l'alumine halogénée selon la revendication 8, caractérisée en ce que l'alumine halogénée est une alumine fluorée.

10. Procédé de préparation du catalyseur conforme aux revendications 1 à 9, caractérisé en ce que l'on mélange à sec une poudre d'alumine avec la quantité requise d'halogénure d'ammonium pour que la teneur en halogène du mélange soit comprise entre 0,2 et 15 % en poids par rapport à l'alumine, on calcine sous atmosphère inerte, on laisse ensuite refroidir l'alumine halogénée, on met en suspension l'alumine halogénée dans une solution aqueuse d'un sel soluble de palladium, on précipite du palladium métallique sur l'alumine halogénée en augmentant le pH de la suspension de manière progressive jusqu'à une valeur légèrement alcaline, on sépare le catalyseur obtenu et on le sèche.

11. Procédé de préparation du catalyseur conforme aux revendications 1 à 9, caractérisé en ce que l'on évapore à sec une suspension de poudre d'alumine dans un volume de solution d'halogénure d'ammonium réglé pour que la teneur en halogène du mélange soit comprise entre 0,2 et 15 % en poids par rapport à l'alumine, on calcine sous atmosphère inerte, on laisse ensuite refroidir l'alumine halogénée, on met en suspension l'alumine halogénée dans une solution aqueuse d'un sel soluble de palladium, on précipite du palladium métallique sur l'alumine halogénée en augmentant le pH de la suspension de manière progressive jusqu'à une valeur légèrement alcaline, on sépare le catalyseur obtenu et on le sèche.

12. Procédé selon l'une quelconque des revendications 10 ou 11, caractérisé en ce que la calcination est effectuée à une température comprise entre 300 et 800°C pendant une durée comprise entre 3 et 24 heures.

## Claims

1. Process for the manufacture of hydrogen peroxide in three main stages consisting, in a first stage, in hydrogenating an organic solution of alkylanthraquinones and/or of tetrahydroalkylanthraquinones, in oxidising by means of air, oxygen or oxygen-enriched air, in a second stage, the organic solution arising from the first stage and, in a third stage, in extracting by means of water the hydrogen peroxide formed in the second stage, according to which the first, hydrogenation, stage is carried out in the presence of a catalyst made of metallic palladium supported on alumina, characterised in that the alumina of the support of the hydrogenation catalyst has been subjected to a halogenation treatment prior to fixing the palladium.

2. Process according to Claim 1, characterised in that the halogenation treatment is selected from at least one of the chlorination, bromination or fluorination treatments.

3. Process according to Claim 1 or 2, characterised in that the halogenation treatment is a fluorination treatment.

4. Process according to any one of Claims 1 to 3, characterised in that the alumina of the catalyst support has been additionally doped at a rate of less than 5 % of its weight with at least one alkali metal or one alkaline-earth metal.

5. Process according to any one of Claims 1 to 3 or according to Claim 4, characterised in that the alumina of the catalyst support is additionally impregnated at a rate of less than 5 % of its weight with oxides of metals chosen from iron, chromium and molybdenum.

6. Process according to any one of Claims 1 to 5, characterised in that the alumina of the catalyst support has been treated with a quantity of halogen of between 0.2 and 15 % of the weight of the alumina.

7. Process according to any one of Claims 1 to 6, characterised in that the metallic palladium content of 3the catalyst is between 0.1 and 5 % by weight.

8. Use of metallic palladium supported on halogenated alumina as a catalyst for the hydrogenation, with gaseous hydrogen, of an organic solution of alkylanthraquinones into hydrogenated quinones.

9. Use of metallic palladium supported on halogenated alumina according to Claim 8, characterised in that the halogenated alumina is a fluorinated alumina.

10. Process for the preparation of the catalyst according to Claim 8 or 9, characterised in that an alumina powder is mixed while dry with the requisite quantity of ammonium halide so that the halogen content of the mixture is between 0.2 and 15 % by weight with respect to the alumina, the mixture is calcined under an inert atmosphere, the halogenated alumina is then allowed to cool, the halogenated alumina is suspended in an aqueous solution of a soluble palladium salt, metallic palladium is precipitated on the halogenated alumina by progressively increasing the pH of the suspension to a slightly alkaline value, the catalyst obtained is separated and is dried.

11. Process for the preparation of the catalyst according to Claim 8 or 9, characterised in that a suspension of alumina powder in a volume of ammonium halide solution adjusted so that the halogen content of the mixture is between 0.2 and 15 % by weight with respect to the alumina is evaporated to dryness, the mixture is calcined under an inert atmosphere, the halogenated alumina is then allowed to cool, the halogenated alumina is suspended in an aqueous solution of a soluble palladium salt, metallic palladium is precipitated on the halogenated alumina by progressively increasing the pH of the suspension to a slightly alkaline value, the catalyst obtained is separated and is dried.

12. Process according to any one of Claims 10 or 11, characterised in that the calcination is carried out at a temperature of between 300 and 800°C for a length of time of between 3 and 24 hours.

## Patentansprüche

1. Verfahren zur Herstellung von Wasserstoffperoxid in drei hauptsächlichen Schritten, das in einem ersten Schritt aus der Hydrierung einer organischen Lösung von Alkylanthrachinonen und/oder Tetrahydroalkylanthrachinonen, in einem zweiten Schritt aus der Oxidation der aus dem ersten Schritt stammenden organischen Lösung mittels Luft, Sauerstoff oder sauerstoffangereicherter Luft und in einem dritten Schritt aus der Extraktion des in dem zweiten Schritt gebildeten Wasserstoffperoxids mittels Wasser besteht, gemäß dem der erste Hydrierungsschritt in Gegenwart eines Katalysators mit metallischem Palladium, der auf Aluminiumoxid aufgebracht ist, erfolgt, dadurch gekennzeichnet, daß der Aluminiumoxidträger des Hydrierungskatalysators vor der Fixierung des Palladiums einer Halogenierungsbehandlung unterworfen worden ist.

2. Verfahren gemäß Anspruch 1, dadurch gekennzeichnet, daß die Halogenierungsbehandlung unter wenigstens einer der Chlorierungs-, Bromierungs- oder Fluorierungsbehandlungen ausgewählt ist.

3. Verfahren gemäß Anspruch 1 oder 2, dadurch gekennzeichnet, daß die Halogenierungsbehandlung eine Fluorierungsbehandlung ist.

4. Verfahren gemäß einem der Ansprüche 1 bis 3, dadurch gekennzeichnet, daß das Aluminiumoxid des Katalysatorträgers außerdem in einer Menge von weniger als 5% seines Gewichts mit wenigstens einem Alkalimetall oder einem Erdalkalimetall dotiert worden ist.

5. Verfahren gemäß einem der Ansprüche 1 bis 3 oder gemäß Anspruch 4, dadurch gekennzeichnet, daß das Aluminiumoxid des Katalysatorträgers außerdem in einer Menge von weniger als 5% seines Gewichts mit Oxiden von Metallen, die unter Eisen, Chrom und Molybdän ausgewählt sind, durchsetzt wird.

6. Verfahren gemäß einem der Ansprüche 1 bis 5, dadurch gekennzeichnet, daß das Aluminiumoxid des Katalysatorträgers mit einer Halogenmenge zwischen 0,2 und 15% des Aluminiumoxidgewichts behandelt worden ist.

7. Verfahren gemäß einem der Ansprüche 1 bis 6, dadurch gekennzeichnet, daß der Gehalt des Katalysators an metallischem Palladium zwischen 0,1 und 5 Gew.-% liegt.

8. Verwendung des auf halogeniertem Aluminiumoxid aufgebrachten metallischen Palladiums als Katalysator für die Hydrierung einer organischen Lösung von Alkylanthrachinonen mittels gasförmigem Wasserstoff zu hydrierten Chinonen.

9. Verwendung des auf halogeniertes Aluminiumoxid aufgebrachten metallischen Palladiums gemäß Anspruch 8, dadurch gekennzeichnet, daß das halogenierte Aluminiumoxid ein fluoriertes Aluminiumoxid ist.

10. Verfahren zur Herstellung des Katalysators gemäß den Ansprüchen 1 bis 9, dadurch gekennzeichnet, daß man ein Aluminiumoxidpulver mit der Menge Ammoniumhalogenid, die erforderlich ist, damit der Halogengehalt der Mischung, bezogen auf das Aluminiumoxid, zwischen 0,2 und 15 Gew.-% liegt, trocken mischt, man unter inerter Atmosphäre glüht, man dann das halogenierte Aluminiumoxid abkühlen läßt, man das halogenierte Aluminiumoxid in einer wäßrigen Lösung eines löslichen Palladiumsalzes suspendiert, man metallisches Palladium auf dem halogenierten Aluminiumoxid ausfällt, indem man den pH der Suspension schrittweise bis auf einen leicht alkalischen Wert erhöht, man den erhaltenen Katalysator abtrennt und man ihn trocknet.

11. Verfahren zur Herstellung des Katalysators gemäß den Ansprüchen 1 bis 9, dadurch gekennzeichnet, daß man eine Suspension von Aluminiumoxidpulver in einem Volumen Ammoniumhalogenidlösung, das so eingestellt ist, daß der Halogengehalt der Mischung, bezogen auf das Aluminiumoxid, zwischen 0,2 und 15 Gew.-% liegt, bis zur Trockne eindampft, man unter inerter Atmosphäre glüht, man dann das halogenierte Aluminiumoxid abkühlen läßt, man das halogenierte Aluminiumoxid in einer wäßrigen Lösung eines löslichen Palladiumsalzes suspendiert, man metallisches Palladium auf dem halogenierten Aluminiumoxid ausfällt, indem man den pH der Suspension schrittweise bis auf einen leicht alkalischen Wert erhöht, man den erhaltenen Katalysator abtrennt und man ihn trocknet.

12. Verfahren gemäß einem der Ansprüche 10 oder 11, dadurch gekennzeichnet, daß das Glühen bei einer Temperatur zwischen 300 und 800 °C während einer Dauer zwischen 3 und 24 Stunden ausgeführt wird.
